# EUROPÄISCHE PATENTSCHRIFT

(11) **EP 1 417 404 B1**
(45) Veröffentlichungstag und Bekanntmachung des Hinweises auf die Patenterteilung: **20.10.2004**
(21) Anmeldenummer: 02767100.7
(22) Anmeldetag: 16.08.2002
(51) Int. Cl.: F02D 9/10, H01F 7/14, F01L 9/04

(54) **HOCHGESCHWINDIGKEITSSTELLEINRICHTUNG**
HIGH-SPEED CONTROLLING DEVICE
DISPOSITIF DE COMMANDE A GRANDE VITESSE

(30) Priorität: 18.08.2001 DE 10140706
(43) Veröffentlichungstag der Anmeldung: 12.05.2004
(73) Patentinhaber: MAHLE Filtersysteme GmbH, 70376 Stuttgart (DE)
(72) Erfinder: ELSÄSSER, Alfred, 75210 Keltern (DE); SCHILLING, Wolfgang, 71334 Waiblingen (DE); SCHMIDT, Jan, 70374 Stuttgart (DE); HEINRICH, Joachim, 07751 Jena (DE); BEYER, Frank, 98693 Ilmenau (DE)
(74) Vertreter: Bernhard, Uwe
(86) Internationale Anmeldenummer: PCT/DE2002/002992
(87) Internationale Veröffentlichungsnummer: WO 2003/018979

(56) Entgegenhaltungen:
- EP-A- 0 761 949
- EP-A- 1 087 110
- DE-A- 19 824 537
- GB-A- 1 572 229
- US-A- 5 131 365
- US-A- 5 531 205

## Beschreibung

Die vorliegende Erfindung betrifft eine Hochgeschwindigkeitsstelleinrichtung geeignet zum Verstellen eines SchaltgJiedes zwischen zwei Schaltstellungen bei sehr kleinen Schaltzeiten, mit den Merkmalen des Oberbegriffs des Anspruchs 1.

Bei bestimmten Anwendungsfällen muss ein mechanisches Schaltglied innerhalb extrem kurzer Schaltzeiten zwischen zwei Schaltstellungen verstellt werden. Beispielsweise ist aus der DE 37 37 824 A1 ein Verfahren zum Betrieb einer Brennkraftmaschine bekannt. Diese Brennkraftmaschine besitzt einen zu mindestens einem Verbrennungsraum der Brennkraftmaschine führenden Einlaßkanal, mindestens ein zwischen dem Einlaßkanal und jedem Verbrennungsraum angeordnetes, dem Einlaßbeginn und den Einlaßschluß des Verbrennungsraums bestimmendes Einlaßventil und ein stromauf des Einlaßventils angeordnetes Zusatzventil. Entsprechend den bekannten Betriebsverfahren ist dieses Zusatzventil beim Öffnen des Einlaßventils geöffnet und wird während einer einen zeitlichen Abstand von Einlaßbeginn und Einlaßschluß einhaltenden Periode vorübergehend geschlossen. Durch diese Vorgehensweise können dynamische Effekte beim Einlaßhub des sich im jeweiligen Verbrennungsraum verstellenden Kolbens zur Erhöhung der Beladung des Verbrennungsraums mit Frischluft ausgenutzt werden. Darüber hinaus können innerhalb der Öffnungsperiode des Einlaßventils durch entsprechende Betätigungen des Zusatzventils deutlich kleinere, insbesondere mehrere, Öffnungszeiten realisiert werden, die außerdem innerhalb der genannten Öffnungsperiode relativ beliebig nach "früh" oder "spät" verschoben werden können. Insoweit können mit Hilfe des entsprechend betätigbaren Zusatzventils variable Ventilsteuerheiten realisiert werden, auch wenn die eigentliche Ventilsteuerung, z.B. mittels Nockenwelle, an sich invariant ist.

Um das Zusatzventil während der Öffnungszeit des oder der Einlaßventile einmal oder mehrmals zu schließen und wieder zu öffnen, müssen sehr kurze Schaltzeiten für das Zusatzventil realisiert werden. Die hierzu erforderlichen Schaltzeiten liegen bei dieser speziellen Anwendungsform bei etwa 2ms. Mit herkömmlichen Elektromotoren sind Schaltzeiten von etwa 10ms erzielbar.

Aus der WO 98/42953 ist eine Hochgeschwindigkeitsstelleinrichtung bekannt, die zwei schaltbare Elektromagnete aufweist, zwischen denen ein Anker angeordnet ist, der mit dem als Ein- oder Auslaßventil einer Brennkraftmaschine ausgebildeten Schaltglied antriebsgekoppelt ist. In der ersten Schaltstellung des Ventils liegt der Anker an dem einen Elektromagneten an, während er in der zweiten Schaltstellung am anderen Elektromagneten zur Anlage kommt. Der Anker ist dabei über ein Verbindungsteil mit einem Drehstab verbunden, der an einem ortsfesten Bauteil der Verstelleinrichtung starr eingespannt ist. Am Anker ist ein Betätigungselement gelagert, das zumindest für einen Öffnungshub mit dem Ventil zusammenwirkt. Die bekannte Hochgeschwindigkeitsstelleinrichtung dient hierbei als Ventiltrieb bei einer Brennkraftmaschine, mit dem variable Steuerzeiten für das jeweilige Ventil realisiert werden. Bei großen Drehzahlen der Brennkraftmaschine können mit Hilfe einer derartigen Hochgeschwindigkeitsstelleinrichtung Stellzeiten von etwa 3ms erreicht werden.

Es besteht jedoch ein Bedarf an einer Hochgeschwindigkeitsstelleinrichtung, mit deren Hilfe noch kürzere Schaltzeiten erreicht werden können. Für die weiter obengenannte Anwendungsform zur Betätigung eines Zusatzventils bedeutet dies beispielsweise eine Verkürzung der Schaltzeiten um wenigstens 30%.

Die US 5,131,365 zeigt eine Hochgeschwindigkeitsstelleinrichtung der eingangs genannten Art, die zum Verstellen eines als Schaltklappe ausgebildeten Schaltglieds zwischen zwei Schaltstellungen bei sehr kleinen Schaltzeiten geeignet ist. Die Schaltklappe ist dabei in einer gasführenden Leitung, nämlich in einem Einlasskanal einer Brennkraftmaschine stromauf eines Einlassventils, angeordnet und kann den Leitungsquerschnitt in der ersten Schaltstellung verschließen und in der zweiten Schaltstellung öffnen. Bei der bekannten Hochgeschwindigkeitsstelleinrichtung ist die Schaltklappe mit Hilfe einer Vorspannfeder in ihre Schließstellung vorgespannt. Dabei ist ein Elektromagnet vorgesehen, der die Schaltklappe in ihrer Schließstellung festhält, wodurch bei einem Befüllungshub des Kolbens zylinderseitig ein Unterdruckimpuls aufgebaut werden kann. Sobald der Elektromagnet die Schaltklappe loslässt, bewirkt der zylinderseitige Unterdruck ein Öffnen der Schaltklappe. Sobald ein Druckausgleich an der Schaltklappe vorliegt, kann die Rückstellfeder die Schaltklappe wieder in ihre Schließstellung zurückverstellen, in der sie dann erneut vom Elektromagneten gehalten werden kann. Die bekannte Hochgeschwindigkeitsstelleinrichtung arbeitet somit passiv, und zwar in Abhängigkeit der Kolbenbewegung. Wünschenswert ist jedoch eine Hochgeschwindigkeitsstelleinrichtung, die erheblich flexibler verwendbar ist und dennoch extrem kurze Schaltzeiten ermöglicht.

Aus der GB 1 572 299 ist eine andere Hochgeschwindigkeitsstelleinrichtung bekannt, mit deren Hilfe ein Ablenkblech zwischen zwei Endstellungen umgeschaltet werden kann. Dieses Ablenkblech arbeitet als Weiche in einer Förderstrecke für Massendrucksachen oder dergleichen und ist über eine Welle mit einem Anker antriebsverbunden. Dieser Anker ist zwischen zwei Elektromagneten um die Längsachse der Welle drehend verstellbar.

Die vorliegende Erfindung beschäftigt sich mit dem Problem, für eine Hochgeschwindigkeitsstelleinrichtung der eingangs genannten Art eine Ausführungsform anzugeben, mit der besonders kurze Schaltzeiten realisierbar sind. Des weiteren soll die Hochgeschwindigkeitsstelleinrichtung einen kompakten Aufbau besitzen, insbesondere um dadurch die Unterbringung der Hochgeschwindigkeitsstelleinrichtung in einem Motorraum eines Kraftfahrzeugs zu ermöglichen.

Dieses Problem wird erfindungsgemäß durch eine Hochgeschwindigkeitsstelleinrichtung mit den Merkmalen des Anspruchs 1 gelöst.

Die Erfindung beruht auf dem allgemeinen Gedanken, die Hochgeschwindigkeitsstelleinrichtung als Drehantrieb auszubilden, bei dem der Anker möglichst direkt das Schaltglied zu Schwenkverstellungen antreibt. Erreicht wird dies durch eine drehbar gelagerte Welle, an der sowohl der Anker als auch das Schaltglied fest angebracht sind. Bei dieser Bauweise ist somit das Schaltglied um die Längsachse dieser Welle zwischen seinen beiden Schaltstellungen drehverstellbar ausgestaltet. Durch den erfindungsgemäßen Aufbau befinden sich die von der Hochgeschwindigkeitsstelleinrichtung zu bewegenden Massen relativ nahe am Drehzentrum der Verstellbewegung, wodurch insgesamt relativ kleine Trägheitsmomente erreicht werden. Kleinere Trägheitsmomente begünstigen schnellere Schaltzeiten, wobei gleichzeitig der Energiebedarf zur Realisierung der kleinen Schaltzeiten sinkt. Die Hochgeschwindigkeitsstelleinrichtung kann dadurch kompakt aufgebaut werden.

Entsprechend einer besonders vorteilhaften Ausführungsform kann jeder Elektromagnet ein Joch aufweisen, an dem eine Anschlagfläche für den Anker ausgebildet ist, an welcher der Anker in einer seiner Schaltstellungen zur Anlage kommt. Dabei soll das Joch im Bereich der Anschlagfläche durch einen Spalt unterbrochen sein, der bei an der Anschlagfläche anliegendem Anker vom Anker überbrückt ist. Durch diese Maßnahme erfolgt im Bereich der Anschlagfläche eine gezielte Formgebung des vom Joch erzeugten magnetischen Feldes, derart, dass eine extreme Steigerung der am Anker wirkenden magnetischen Anziehungskräfte erreicht wird. Während die magnetischen Feldlinien bis zum Spalt im wesentlichen innerhalb des Jochs verlaufen, ergibt sich zur Überbrückung des Spalts ein bauchförmiger Verlauf, der sich zum Anker hin erstreckt und dort eine entsprechend Polarisierung erzeugt.

Je kleiner die Spaltweite des Spalts, desto ausgeprägter ist die Auswölbung der magnetischen Feldlinien. Bevorzugt wird eine Ausführungsform, bei welcher die Öffnungsweite des Spalts kleiner ist als die Dicke des Ankers, die quer zur radialen Erstreckung des Ankers und quer zur axialen Erstreckung des Ankers gemessen ist.

Bei einer besonderen Weiterbildung kann das Joch zumindest an einen am Spalt endenden Endabschnitt einen sich zum Spalt hin verjüngenden Querschnitt aufweisen. Durch diese Maßnahme erfolgt in dem die Verjüngung aufweisenden Endabschnitt eine Konzentration der magnetischen Feldlinien zur Anschlagfläche hin, wodurch sich die Ausbeulung der magnetischen Feldlinien zum Anker hin zusätzlich verstärken läßt. Somit führt auch diese Maßnahme zu einer Steigerung der am Anker wirksamen magnetischen Anziehungskräfte.

Entsprechend einer vorteilhaften Weiterbildung kann mit der Welle ein Federelement gekoppelt sein, wobei diese Kopplung so erfolgt, dass das Federelement in den beiden Schaltstellungen des Schaltglieds ein das Schaltglied in Richtung auf die jeweils andere Schaltstellung antreibendes Rückstellmoment in die Welle einleitet und dass das Federelement in einer Mittelstellung des Schaltglieds kein Rückstellmoment in die Welle einleitet. Durch diese Bauweise wirkt das Federelement quasi als Speicher für potentielle Energie, der in den beiden Schaltstellungen jeweils voll geladen ist und bei der Umschaltung der Elektromagnete zu Beginn der Drehverstellung, also zu einem Zeitpunkt, in dem sich das magnetische Feld aufbauen muss, seine maximale Leistungsabgabe zur Beschleunigung des Ankers zeigt.

Ein besonders kompakter Aufbau ergibt sich dann, wenn die Welle als Hohlwelle ausgebildet ist und das Federelement als Torsionsstab ausgebildet ist, der sich koaxial in der Hohlwelle erstreckt, einenends drehfest mit der Hohlwelle und anderenends drehfest mit einem unbewegten Bauteil der Hochgeschwindigkeitsstelleinrichtung verbunden ist. Mit anderen Worten, der Torsionsstab ist mit dem aus der Hohlwelle herausgeführten Ende starr eingespannt. Diese Bauweise hat darüber hinaus den Vorteil, dass der Torsionsstab durch seine zentrische Anordnung in der Hohlwelle ein minimales Trägheitsmoment aufweist, wodurch maximale Beschleunigungen unterstützt werden.

Gemäß einer besonders geschickten Bauweise kann der Torsionsstab an dem dem Anker zugeordneten Ende der Hohlwelle befestigt sein, während die Hohlwelle an ihrem dem Schaltglied zugeordneten Ende direkt oder indirekt am Torsionsstab drehverstellbar radial abgestützt ist. Durch diese Bauweise vereinfacht sich die Lagerung der Hohlwelle im Bereich des starr eingespannten Endes des Torsionsstabs.

Das der Erfindung zugrundliegende Problem wird auch durch eine Verwendung gemäß Anspruch 18 gelöst.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1A bis 1C: Prinzipdarstellungen einer besonderen Anwendungsform der vorliegenden Erfindung bei verschiedenen Stellungen eines Schaltgliedes,
- Fig. 2: einen Längsschnitt durch eine erfindungsgemäße Hochgeschwindigkeitsstelleinrichtung,
- Fig. 3: einen Querschnitt entsprechend den Schnittlinien III in Fig. 2 durch die Hochgeschwindigkeitsstelleinrichtung,
- Fig. 4: ein stark vereinfachter Querschnitt wie in Fig. 3, jedoch bei einer anderen Ausführungsform, und
- Fig. 5: eine Schaltungsanordnung zum Beschalten eines Elektromagneten der Hochgeschwindigkeitsstelleinrichtung.

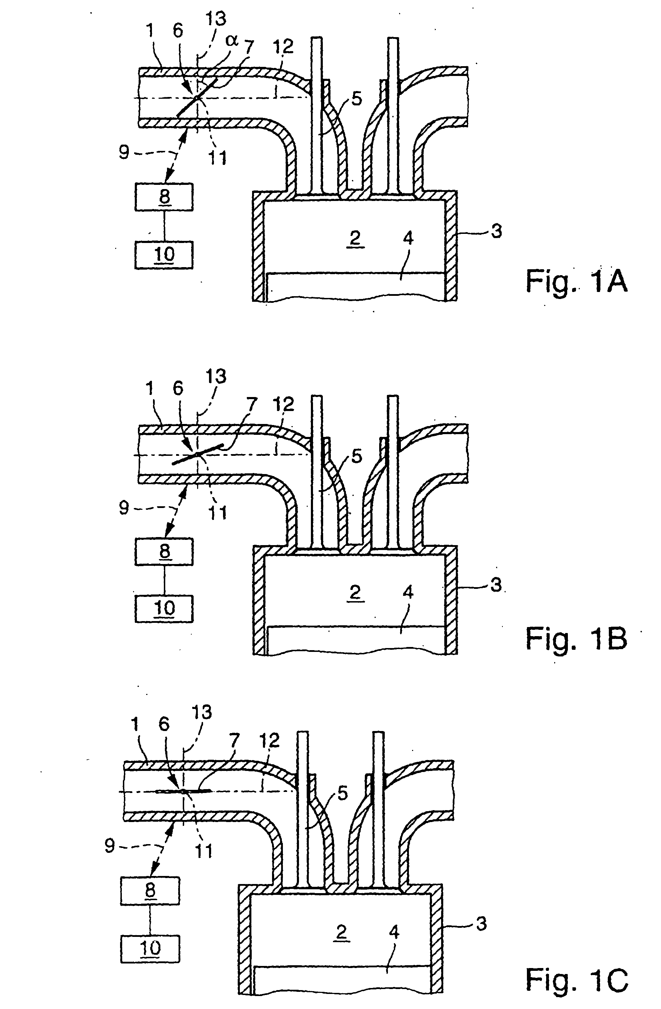

Entsprechend den Fig. 1A bis 1C weist eine im übrigen nicht dargestellte Brennkraftmaschine, insbesondere eines Kraftfahrzeugs, einen Einlaßkanal 1 auf, der im folgenden auch als Frischluftversorgungsleitung bezeichnet werden kann. Die Brennkraftmaschine kann als Dieselmotor oder als Ottomotor sowie als Saugmotor oder als aufgeladener Motor ausgebildet sein. Der Einlaßkanal 1 führt zu wenigstens einem Verbrennungsraum 2 der Brennkraftmaschine, der in einem Zylinder 3 ausgebildet ist, in dem ein Kolben 4 hubverstellbar gelagert ist. Am Übergang zwischen Einlaßkanal 1 und Verbrennungsraum 2 ist ein Einlaßventil 5 angeordnet; ebenso sind Ausführungsformen mit mehreren Einlaßventilen 5 möglich. Stromauf dieses Einlaßventils 5 ist im Einlaßkanal 1 ein Zusatzventil 6 angeordnet, das im folgenden auch als Schaltglied bezeichnet werden kann. Dieses Zusatzventil oder Schaltglied 6 ist hier als Schaltklappe 7 ausgebildet und kann beispielsweise zur Verbesserung der Befüllung des Verbrennungsraums 2 mit Frischluft verwendet werden, indem durch eine gezielte Schaltbetätigung des Zusatzventils 6 strömungsdynamische Effekte beim Befüllungsvorgang des Verbrennungsraums 2 ausgenutzt werden. Der Einlaßkanal oder die Frischluftversorgungsleitung 1 bilden somit bei der hier gezeigten Anwendung eine gasführende Leitung, deren Leitungsquerschnitt mit Hilfe des Schaltglieds 6 geöffnet bzw. verschlossen werden kann.

Zur Betätigung des Zusatzventils oder Schaltglieds 6 ist eine Hochgeschwindigkeitsstelleinrichtung 8 vorgesehen, die in geeigneter Weise mit dem Zusatzventil 6 antriebsverbunden ist. Diese Antriebsverbindung ist in den Fig. 1A bis 1C durch einen gepunkteten Pfeil 9 symbolisch dargestellt. Zum Steuern der Hochgeschwindigkeitsstelleinrichtung 8 ist eine entsprechende Steuerung 10 vorgesehen.

Mit Hilfe der Hochgeschwindigkeitsstelleinrichtung 8 ist das Schaltglied 6 zwischen einer in Fig. 1 dargestellten ersten Schaltstellung, in welcher das Schaltglied 6 den Leitungsquerschnitt des Einlaßkanals 1 verschließt, über eine in Fig. 1D gezeigte Mittelstellung in eine in Fig. 1C gezeigte zweite Schaltstellung verstellbar, in der das Schaltglied 6 den Leitungsquerschnitt des Einlaßkanals 1 (maximal) öffnet. Bei der hier gezeigten bevorzugten Ausführungsform ist die Schaltklappe 7 im Leitungsquerschnitt so angeordnet, dass ihre Schwenkachse 11 im wesentlichen senkrecht auf einer Längsmittelachse 12 des Einlaßkanals 1 steht. Gemäß der hier gewählten Darstellung steht diese Schwenksachse 11 somit senkrecht auf der Zeichnungsebene. Des weiteren ist die Schaltklappe 7 so dimensioniert und positioniert, dass sie in ihrer ersten Schaltstellung gemäß Fig. 1A um einen Winkel α geneigt zu einer Ebene 13 verläuft, die senkrecht zur Längsachse 12 des Einlaßkanals 1 verläuft bzw. in welcher der Leitungsquerschnitt des Einlaßkanals 1 liegt. In der hier gezeigten Ausführungsform beträgt dieser Winkel α 45°. Durch diese Anordnung ergibt sich eine Reduzierung des Stellwegs oder Stellwinkels, der erforderlich ist, um die Schaltklappe 7 zwischen ihren beiden Schaltstellungen gemäß Fig. 1A und Fig. 1C zu verschwenken. Denn in der zweiten Schaltstellung gemäß Fig. 1C verläuft die Schaltklappe 7 zur Erzielung eines maximalen Öffnungsgrades im wesentlichen parallel zur Leitungsachse 12, so dass der Drehwinkel, um den die Schaltklappe 7 zwischen ihren Schaltstellungen gemäß Fig. 1A und 1C verschwenkt werden muss, lediglich 45° beträgt. Es ist klar, dass sich dadurch die zur Verstellung. der Schaltklappe 7 erforderlichen Schaltzeiten dementsprechend reduzieren.

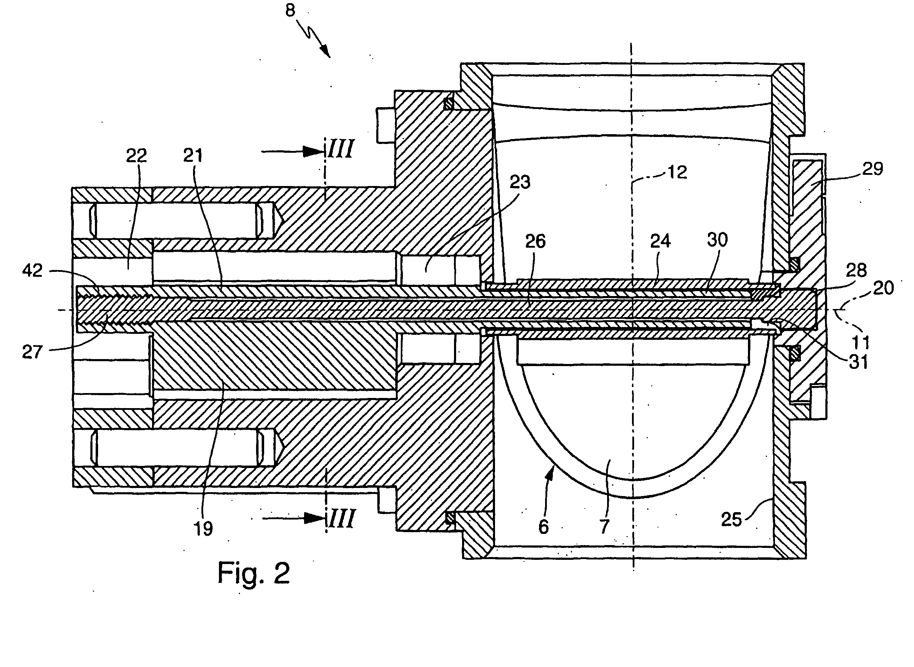

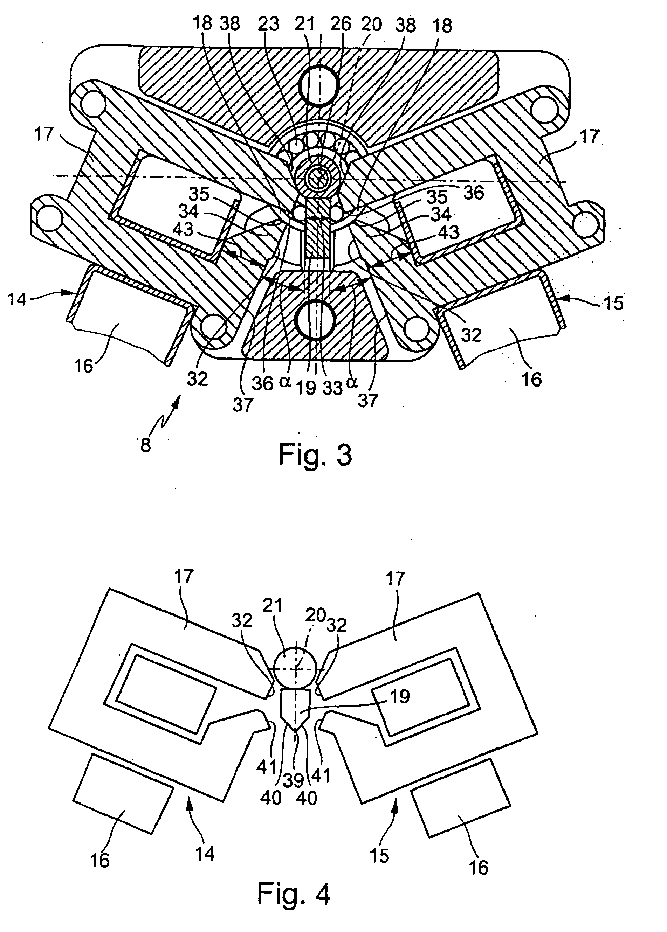

Entsprechend den Fig. 2 und 3 weist die erfindungsgemäße Hochgeschwindigkeitsstelleinrichtung 8 zwei Elektromagnete 14 und 15 auf, die im Querschnitt gemäß Fig. 3 V-förmig angeordnet sind. Jeder Elektromagnet 14,15 besitzt eine Spule 16 sowie ein Joch 17, das eine Hälfte der Spule 16 bis auf einen Spalt 18 ringförmig umschließt. Die Joche 17 bestehen üblicherweise aus einem relativ leicht magnetisierbaren Eisen oder Stahl, insbesondere sind die Joche 17 aus Blechen in Schichtbauweise hergestellt. Die Elektromagnete 14,15 sind somit schaltbar ausgebildet. Zur vereinfachten Herstellung ist es zweckmäßig, die Joche 17 wenigstens aus zwei Einzelteilen zusammenzubauen, wobei mit dem Zusammenbau gleichzeitig die bereits vorab fertig gewickelte Spule 16 einsetzba.r ist bzw. die ungewickelte Spule 16 einsetzbar und relativ leicht wickelbar ist.

Zwischen den Elektromagneten 14 und 15 ist ein Anker 19 angeordnet, der um eine Schwenkachse 20 drehend verstellbar gelagert ist. Zu diesem Zweck ist der Anker 19 mit einer Welle 21 drehfest verbunden. Dabei kann der Anker 19 beispielsweise an die Welle 2 angeschweißt oder mit dieser einteilig hergestellt sein. Bei der zweiteiligen Variante ist es möglich, die Welle 21 und den Anker 19 aus verschiedenen Materialien herzustellen. Vorzugsweise wird der Anker 19 aus einem leicht magnetisierbaren Eisen oder Stahl hergestellt, während es für die Welle 21 vorteilhaft sein kann, diese aus einem schwer oder nicht magnetisierbaren Eisen oder Stahl, z.B. austenitscher Stahl, herzustellen. Die Welle 21 ist beiderseits des Ankers 19 in Radiallagern 22 und 23 drehverstellbar gelagert.

Entsprechend Fig. 2 ist das Schaltglied 6, das hier als elliptische Schaltklappe 7 ausgebildet ist, ebenfalls drehfest mit der Welle 21 verbunden. Dabei ist das Schaltglied 6 axial versetzt zum Anker 19 an der Welle 21 angeordnet. Zweckmäßig ist die Schaltklappe 7 im wesentlichen aus einem extrem leichten Werkstoff, insbesondere CFK- oder GFK-Kunststoffgewebe, hergestellt, wobei die Schaltklappe 7 bei der hier gezeigten Ausführungsform eine, vorzugsweise metallische, Hülse 24 aufweist, die in den Leichtbauwerkstoff der übrigen Schaltklappe 7 eingebunden ist. Die Hülse 24 ist drehfest mit der Welle 21 verbunden, insbesondere verschweißt oder verklebt. Da die Schaltklappe 7 an derselben Welle 21 wie der Anker 19 angeordnet ist, fällt die Schwenkachse 11 der Schaltklappe 7 mit der Schwenkachse 20 des Ankers 19 zusammen.

Entsprechend Fig. 2 ist die Hochgeschwindigkeitsstelleinrichtung 8 als Modul ausgebildet, das beispielsweise in den Einlaßkanal 1 gemäß den Fig. 1A bis 1C eingesetzt werden kann, wobei die Hochgeschwindigkeitsstelleinrichtung 8 einen entsprechenden Kanalabschnitt 24 umfaßt, in dem das Schaltglied 6 angeordnet ist.

Die Welle 21 ist gemäß der hier gezeigten bevorzugten Ausführungsform als Hohlwelle ausgebildet, in der sich ein Torsionsstab 26 koaxial erstreckt. Dieser Torsionsstab 26 ist an seinem dem Anker 19 zugeordneten, in Fig. 2 links dargestellten Ende 27 drehfest mit dem dortigen Ende 42 der Welle 21 verbunden. Beispielsweise ist im Bereich dieser Enden 27,42 eine Radialverzahnung mit axial verlaufenden Zähnen ausgebildet. An seinem, dem Schaltglied 6 zugeordneten, in Fig. 2 rechts dargestellten Ende 28 ist der Torsionsstab 26 starr eingespannt. Zu diesem Zweck ist dieses rechte Ende 28 drehfest, z.B. wieder über eine Vielzahnverzahnung, mit einem unbeweglichen Bauteil 29 der Hochgeschwindigkeitsstelleinrichtung 8 verbunden. Dieses Bauteil 29 kann beispielsweise einen Bestandteil eines Gehäuses der Hochgeschwindigkeitsstelleinrichtung 8 bilden.

Die Lagerung der Welle 21 im Bereich des Schaltglieds 6, da sich die Welle 21 an ihrem vom Anker 19 abgewandten Ende 30 über die Hülse 24 und eine Buchse 31 am Torsionsstab 26 drehbar gelagert abstützt. Diese Abstützung erfolgt im wesentlichen radial, wobei durch eine entsprechende Konturierung der Buchse 31 eine Zentrierung der Welle 21 erreicht wird.

Die in den Fig. 2 und 3 gezeigte Mittelstellung des Ankers 19 korreliert mit der in Fig. 1B gezeigten Mittelstellung des Schaltglieds 6. In dieser Mittelstellung des Ankers 19 bzw. des Schaltglieds 6 ist der Torsionsstab 26 entspannt, d.h. er leitet kein Rückstellmoment in die Welle 21 ein.

Die Schaltstellungen der Fig. 1A und 1C entsprechen jeweils einer maximalen Auslenkung oder Drehverstellung des Ankers 19 um den Winkel α in die eine oder in die andere Drehrichtung. Der Anker 19 kommt dann großflächig an einer entsprechenden Anschlagfläche 32 des jeweiligen Jochs 17 zur Anlage. In dieser Schaltstellung ist der Torsionsstab 26 maximal verdreht, wobei er potentielle Ernergie speichert und ein maximales Rückstellmoment in die Welle 21 einleitet, die den Anker 19 in die jeweils andere Schaltstellung anzutreiben sucht. Damit der Anker 19 in der jeweiligen Schaltstellung verbleibt, müssen über die Elektromagnete 14 und 15 die entsprechenden Haltekräfte in den Anker 19 eingeleitet werden.

Zur Erzeugung dieser relativ hohen Haltekräfte dient zum einen der Spalt 18 im Joch 17, durch den die magnetischen Feldlinien in Richtung auf den Anker 19 abgelenkt werden. Je enger dieser Spalt 18 ausgebildet ist, um so ausgeprägter verläuft die Ausbuchtung der Feldlinien. Zweckmäßig ist die Öffnungsweite dieses Spalts 18 kleiner dimensioniert als eine Dicke 43 des Jochs 17, die neben der Anschlagfläche 32, quer zur axialen Erstreckung des Jochs 17 und quer zur Anschlagfläche 32 gemessen ist. Im vorliegenden Fall ist die Öffnungsweite des Spalts 18 sogar kleiner gewählt als eine Dicke 33 des Ankers 19, die quer zur radialen Erstreckung des Ankers 19 und quer zur axialen Erstreckung des Ankers 19 gemessen ist. Als zusätzliche Maßnahme zur Beeinflussung der Feldlinien ist bei jedem Joch 17 ein an den Spalt 18 angrenzender Endabschnitt 34 mit einem bis zu einem im Spalt 18 liegenden Ende 35 des Jochs 17 abnehmenden Querschnitt versehen, der eine Konzentrierung der Feldlinien in Richtung der Anschlagfläche 32 bewirkt. Des weiteren ist der Spalt 18 etwa so plaziert, dass er bei an der Anschlagfläche 32 anliegendem Anker 19 etwa mittig am Anker 19 positioniert ist, wodurch der Anker 19 die Feldlinien zwischen den im Spalt 18 gegenüberliegenden Enden 35 und 36 des Jochs 17 überbrücken kann. Durch die genannten Maßnahmen zur Beeinflussung der magnetischen Feldlinien wird eine Verstärkung der im Anker 19 wirksamen magnetischen Anziehungskräfte erreicht, wodurch sich die zur Verfügung stehende Leistung besonders günstig in Momente an der Welle 21 umwandeln läßt.

Um besonders schnelle Schaltzeiten realisieren zu können, sind bei der vorliegenden Erfindung außerdem die zu bewegenden Massen möglichst gering gehalten, wobei insbesondere minimale Trägheitsmomente angestrebt werden. Zu diesem Zweck ist der Anker 19 hinsichtlich seiner radialen Erstreckung von der Schwenkachse 20 relativ klein ausgebildet. Entsprechend Fig. 3 ist der Anker 19 in dieser radialen Richtung zumindest deutlich kleiner ausgebildet, als eine dem Anker 19 zugewandte, die Anschlagfläche 32 aufweisende Seite 37 des Jochs 17. Der Massenschwerpunkt verlagert sich dadurch in Richtung Schwenkachse 20. Um einen in Radialrichtung derart kurz bauenden Anker 19 realisieren zu können, sind die Joche 17 sehr nahe an der Welle 21 angeordnet. Vorzugsweise grenzen die Joche 17 und die Welle 21 berührungsfrei aneinander an. In der hier gezeigten Ausführungsform ist bei jedem Joch 17 eine Ecke 38 abgeschrägt, um dadurch die Welle 21 näher an bis quasi in den Zwischenraum zwischen den Jochen 17 zu positionieren.

Als weitere Maßnahme zur Reduzierung der zu bewegenden Massen ist der von den magnetischen Feldlinien durchflossene Querschnitt des Ankers 19, also der sich in Axialrichtung über die Dicke 33 erstreckende Querschnitt des Ankers 19 deutlich kleiner ausgebildet als der von den Magnetfeldlinien durchflossene Querschnitt des Jochs 17 außerhalb der Anschlagfläche 32 bzw. außerhalb des verjüngten Endabschnitts 34. Bei der hier gezeigten Ausführungsform ist der magnetisch durchflossene Querschnitt des Ankers 19 etwa halb so groß wie der durchflossene Querschnitt der Joche 17.

Um hinreichend große Kräfte auf den Anker 19 übertragen zu können, baut dieser in axialer Richtung der Welle 21 erheblich länger als in radialer Richtung (vgl. Fig. 2). Vorzugsweise ist die Erstreckung des Ankers 19 in axialer Richtung wenigstens zwei- oder dreimal so groß als in radialer Richtung. Im hier gezeigten Ausführungsbeispiel ist die axiale Erstreckung des Ankers 19 mehr als viermal so groß wie seine radiale Erstreckung. Es ist klar, dass dementsprechend auch die Elektromagnete 14 und 15 bzw. deren Spulen 16 und Joche 17 eine entsprechende axiale Erstreckung aufweisen, um über die gesamte axiale Länge des Ankers 19 die gewünschten Kräfte auf diesen einleiten zu können.

Entsprechend Fig. 4 kann als weitere Maßnahme zur Reduzierung der bewegten Massen ein von der Schwenkachse 20 entferntes Ende 39 des Ankers 19 abgeschrägte Flanken 40 aufweisen, wobei dann die Anschlagflächen 32 eine dazu komplementäre Anschlagflanke 41 aufweisen. Durch diese ausgestellten Anschlagflanken 41 kann außerdem zusätzlich die Orientierung der Feldlinien in Richtung Anker 19 beeinflußt werden, wodurch sich zusätzlich eine Verstärkung der Anziehungs- bzw. Abstoßungswirkung erreichen läßt.

Die erfindungsgemäße Hochgeschwindigkeitsstelleinrichtung 8 arbeitet wie folgt:

Ausgehend von der in den Fig. 2 bis 4 gezeigten Mittelstellung des Ankers 19 und somit des Schaltglieds 6 wird der Anker 19 zunächst in eine seiner beiden Schaltstellungen verstellt. Zweckmäßig ist dies die in Fig. 1C gezeigte Offenstellung. Da der Torsionsstab 26 zur Erzeugung sehr hoher Rückstellmomente ausgelegt ist, kann die gewünschte Schaltstellung nur mit sehr hohen elektrischen Leistungen direkt aus der Mittelstellung angefahren werden. Vorteilhaft ist daher der Ablauf einer dem Betrieb vorgeschalteten Startprozedur, bei der durch eine gezielte Abfolge von Umpolvorgängen das durch Drehstab 26, Welle 21, Anker 19 und Schaltglied 6 gebildete Schwingungssystem in Schwingungen versetzt wird, deren Amplituden immer mehr zunehmen. Dieses "Aufschaukeln" des Schwingungssystems wird solange durchgeführt, bis der Anker 19 in der gewünschten Schaltstellung am entsprechenden Joch 17 zur Anlage kommt.

Zum Umschalten zwischen der einen Schaltstellung in die andere Schaltstellung werden die Elektromagnete 14 und 15 wechselweise eingeschaltet. Durch die sich dann aufbauenden entgegengesetzt wirkenden Anziehungskräfte wird der Anker 19 zur anderen Schaltstellung hin beschleunigt. Gleichzeitig kann sich der Torsionsstab 26 entspannen, wodurch die Beschleunigung des Ankers 19 gerade in der Anfangsphase der Verstellbewegung extrem verstärkt wird. Über die gemeinsame Welle 21 bewirkt die Schwenkverstellung des Ankers 19 gleichzeitig eine entsprechende Schwenkverstellung des Schaltgliedes 6. Hierbei ist die Verwendung des Torsionsstabs 26 als Antriebsmittel und als Energiespeicher von besonderem Vorteil, da der Torsionsstab 26 selbst nur ein geringes Trägheitsmoment aufweist und daher seine Antriebsenergie nahezu ungebremst an die Welle 21 übertragen kann.

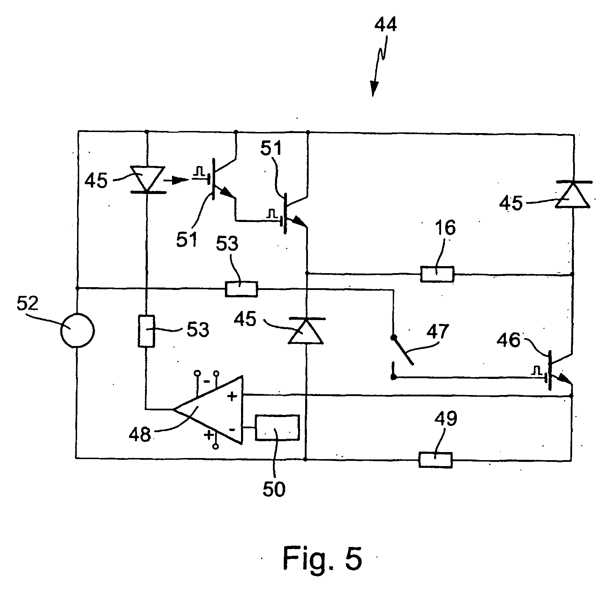

Zur Betätigung bzw. zur Ansteuerung der Elektromagnete 14 und 15 wird eine Schaltungsanordnung 44 entsprechend Fig. 5 bevorzugt. Eine derartige Schaltungsanordnung 44 verwendet dabei eine Chopperung des Stromflusses durch die Spule 16 des jeweiligen Elektromagneten 14, 15. Im Hinblick auf schnellschaltende Elektromagnete 14, 15 hat diese Art der Ansteuerung erhebliche Vorteile gegenüber anderen Prinzipien. Mit Hilfe der Ansteuerung müssen vor allem die drei folgenden Zustände der Elektromagnete 14, 15 unter allen Betriebsbedingungen realisiert werden: Energiezuführung, Energieaufrechterhaltung und Energieabführung. Hierfür wird in der Regel eine sog. H-Brücke verwendet, die auch in der Schaltungsanordnung 44 der Fig. 5 realisiert ist, wobei anstelle der Dioden 45 auch entsprechende Transistoren verwendet werden können. Ein Ein/Ausschalttransistor 46 dient zum Zu- oder Abschalten der Spule 16 des jeweiligen Elektromagneten 14 bzw. 15. Dieser Ein/Ausschalttransistor 46 wird über einen Schalter 47 betätigt. Ein Chopperstromregler 48 vergleicht einen mit Hilfe eines Meßgliedes 49 ermittelbaren Iststrom mit einem bei 50, z.B. durch eine Motorsteuerung, vorgegebenen Sollstrom. In Abhängigkeit dieses Vergleichs betätigt der Chopperstromregler 48 einen Choppertransistor bzw. eine Choppertransistoranordnung 51, um so den Stromfluß von einer Stromversorgung 52 zur Spule 16 des jeweiligen Elektromagneten 14 bzw. 15 auf den Sollwert einzuregeln. In der Schaltungsanordnung 44 sind außerdem zwei Vorwiderstände 53 vorgesehen.

Durch die bei der hier gezeigten bevorzugten Ausführungsform der Schaltungsanordnung 44 gewählte Anordnung des Meßgliedes 49, das vorzugsweise als Stromsensor oder als Meßwiderstand ausgebildet ist, am Emitter des Ein/Ausschalttransistors 46 besitzt das Meßglied 49 einen eindeutigen Bezugspunkt. Hierdurch ist es möglich, dass mit Hilfe des Meßglieds 49 während der gesamten Bestromung der Spule 16 der Stromfluß sicher erfaßt werden kann. Weiterhin besitzt die hier gezeigte Schaltungsanordnung 44 den Vorzug, dass der Choppertransistor 51 als sog. High-Transistor ausgeführt werden kann und folglich auch die Sollstromvorgabe einen eindeutigen Bezugspunkt zum Iststrom besitzt. Die in der Schaltungsanordnung 44 gezeigte H-Brücke charakterisiert sich dadurch, dass das Meßglied 49 zwischen dem Ein/Ausschalttransistor 46 und dem Bezugspunkt für die Strommessung angeordnet ist, wobei außerdem der Choppertransistor 51 als High-Transistor am anderen Pol der Betriebsspannung anliegt. Diese Bauweise wirkt sich positiv auf die Meßdynamik und folglich auf die mit Hilfe der gezeigten Schaltungsanordnung 44 erreichbare Schaltfrequenz der Elektromagnete 14, 15 aus. Desweiteren kann die gezeigte Schaltungsanordnung auch bei sich ändernden Induktivitäten mit hinreichender Genauigkeit die Schwankungen des gechopperten Stromflusses einhalten.

Die Chopperung des Stromflusses kann beispielsweise in Abhängigkeit einer vorbestimmten Chopperfrequenz erfolgen; ebenso ist es möglich, die Chopperung mit Hilfe vorbestimmter, relativ eng gewählter Stromgrenzen durchzuführen, zwischen denen der Stromfluß während der Chopperung schwankt.

## Patentansprüche

1. Hochgeschwindigkeitsstelleinrichtung geeignet zum Verstellen eines als Schaltklappe (7) ausgebildeten Schaltglieds (6) zwischen zwei Schaltstellungen bei sehr kleinen Schaltzeiten, wobei die Schaltklappe (7) in einer gasführenden Leitung (1) angeordnet ist und den Leitungsquerschnitt in der ersten Schaltstellung verschließt und in der zweiten Schaltstellung öffnet,
**dadurch gekennzeichnet,**
- **dass** die Hochgeschwindigkeitsstelleinrichtung (8) zwei schaltbare Elektromagnete (14,15) aufweist, zwischen denen ein mit der Schaltklappe (7) antriebsgekoppelter Anker (19) angeordnet ist, wobei der Anker (19) in der ersten Schaltstellung der Schaltklappe (7) an dem einen Elektromagneten (14) und in der zweiten Schaltstellung der Schaltklappe (7) am anderen Elektromagneten (15) anliegt,
- **dass** der Anker (19) mit einer um ihre Längsachse drehbar gelagerten Welle (21) fest verbunden ist, an der axial versetzt zum Anker (19) auch die Schaltklappe (7) fest angebracht ist.

2. Hochgeschwindigkeitsstelleinrichtung nach Anspruch 1,
**dadurch gekennzeichnet,**
**dass** jeder Elektromagnet (14,15) ein Joch (17) aufweist, an dem eine Anschlagfläche (32) für den Anker (19) ausgebildet ist, an welcher der Anker (19) in einer der Schaltstellungen zur Anlage kommt, wobei das Joch (17) im Bereich der Anschlagfläche (32) durch einen Spalt (18) unterbrochen ist, der bei an der Anschlagfläche (32) anliegendem Anker (19) vom Anker (19) überbrückt ist.

3. Hochgeschwindigkeitsstelleinrichtung nach Anspruch 2,
**dadurch gekennzeichnet,**
**dass** die Öffnungsweite des Spalts (18) kleiner ist als die neben der Anschlagfläche (32), quer zur axialen Erstreckung des Jochs (17) und quer zur Anschlagfläche (32) gemessene Dicke (43) des Jochs (17) oder kleiner ist als die quer zur radialen Erstreckung und quer zur axialen Erstreckung des Ankers (19) gemessene Dicke (33) des Ankers (19).

4. Hochgeschwindigkeitsstelleinrichtung nach Anspruch 2 oder 3,
**dadurch gekennzeichnet,**
**dass** das Joch (17) zumindest an einem am Spalt (18) endenden Endabschnitt (34) einen sich zum Spalt (18) hin verjüngenden Querschnitt aufweist.

5. Hochgeschwindigkeitsstelleinrichtung nach einem der Ansprüche 2 bis 4,
**dadurch gekennzeichnet,**
**dass** die Elektromagneten (14,15) relativ zur Welle (21) so positioniert sind, dass die Joche (17) nahe an der Welle (21) angeordnet sind.

6. Hochgeschwindigkeitsstelleinrichtung nach einem der Ansprüche 2 bis 5,
**dadurch gekennzeichnet,**
**dass** bezüglich der Welle (21) die radiale Erstreckung des Ankers (19) kürzer, insbesondere halb so groß, ist als eine Seite (37) des Joches (17), an der die Anschlagfläche (32) ausgebildet ist.

7. Hochgeschwindigkeitsstelleinrichtung nach einem der Ansprüche 2 bis 6,
**dadurch gekennzeichnet,**
**dass** in Flußrichtung des Magnetfelds der Querschnitt des Ankers (19) kleiner ist als der Querschnitt des Jochs (17) außerhalb der Anschlagfläche (32), insbesondere halb so groß.

8. Hochgeschwindigkeitsstelleinrichtung nach einem der Ansprüche 1 bis 7,
**dadurch gekennzeichnet,**
**dass** bezüglich der Welle (21) der Anker (19) in axialer Richtung, insbesondere mindestens zwei-, drei- oder viermal, größer ist als in radialer Richtung.

9. Hochgeschwindigkeitsstelleinrichtung nach einem der Ansprüche 1 bis 8,
**dadurch gekennzeichnet,**
**dass** ein Federelement (26) mit der Welle (21) gekoppelt ist, wobei die Kopplung so erfolgt, dass das Federelement (26) in den beiden Schaltstellungen der Schaltklappe (7) ein die Schaltklappe (7) in Richtung auf die jeweils andere Schaltstellung antreibendes Rückstellmoment in die Welle (21) einleitet und dass das Federelement (26) in einer Mittelstellung der Schaltklappe (7) kein Rückstellmoment in die Welle (21) einleitet.

10. Hochgeschwindigkeitsstelleinrichtung nach Anspruch 9,
**dadurch gekennzeichnet,**
**dass** die Welle (21) als Hohlwelle ausgebildet ist und dass das Federelement als Torsionsstab (26) ausbildet ist, der sich koaxial in der Hohlwelle (21) erstreckt, einenends drehfest mit der Hohlwelle (21) und anderenends drehfest mit einem unbewegten Bauteil (29) der Hochgeschwindigkeitsstelleinrichtung (8) verbunden ist.

11. Hochgeschwindigkeitsstelleinrichtung nach Anspruch 10,
**dadurch gekennzeichnet,**
**dass** der Torsionsstab (26) an dem dem Anker (19) zugeordneten Ende (42) der Hohlwelle (21) befestigt ist und dass die Hohlwelle (21) an ihrem der Schaltklappe (7) zugeordneten Ende (30) direkt oder indirekt am Torsionsstab (26) drehverstellbar radial abgestützt ist.

12. Hochgeschwindigkeitsstelleinrichtung nach einem der Ansprüche 1 bis 11,
**dadurch gekennzeichnet,**
**dass** die Schaltklappe (7) so im Leitungsquerschnitt angeordnet ist, dass die Welle (21) im wesentlichen senkrecht auf einer Längsachse (12) der Leitung (1) steht.

13. Hochgeschwindigkeitsstelleinrichtung nach einem der Ansprüche 1 bis 12,
**dadurch gekennzeichnet,**
**dass** sich die Schaltklappe (7) in ihrer den Leitungsquerschnitt öffnenden zweiten Schaltstellung im wesentlichen parallel zur Längsachse (12) der Leitung (1) erstreckt und
**dass** sich die Schaltklappe (7) in ihrer den Leitungsquerschnitt verschließenden ersten Schaltstellung geneigt zum Leitungsquerschnitt erstreckt.

14. Hochgeschwindigkeitsstelleinrichtung nach Anspruch 13,
**dadurch gekennzeichnet,**
**dass** sich die Schaltklappe (7) in ihrer den Leitungsquerschnitt verschließenden ersten Schaltstellung etwa um 45° gegenüber dem Leitungsquerschnitt geneigt erstreckt.

15. Hochgeschwindigkeitsstelleinrichtung nach einem der Ansprüche 12 bis 14,
**dadurch gekennzeichnet,**
**dass** die gasführende Leitung durch eine Frischluftversorgungsleitung (1) einer Brennkraftmaschine, insbesondere eines Kraftfahrzeugs, gebildet ist, die wenigstens einen Verbrennungsraum (2) der Brennkraftmaschine mit Frischluft versorgt, wobei die Schaltklappe (7) stromauf wenigstens eines Einlaßventils (5) des jeweiligen Verbrennungsraums (2) in der Frischluftversorgungsleitung (1) angeordnet ist.

16. Hochgeschwindigkeitsstelleinrichtung nach einem der Ansprüche 1 bis 15,
**dadurch gekennzeichnet,**
**dass** eine Schaltungsanordnung (44) zum Schalten der Elektromagnete (14,15) vorgesehen ist, die als H-Brücke ausgebildet ist, einen Ein/Ausschalttransistor (46) und einen Choppertransistor (51) aufweist, der von einem Chopperstromregler (48) in Abhängigkeit eines Vergleiches zwischen einem vorgebbaren oder vorgegebenen Sollstrom und einem mit Hilfe eines Meßglieds (49) ermittelbaren Iststrom gesteuert ist, wobei das Meßglied (49) einerseits am Emitter des Ein/Ausschalttransistors (46) und andererseits an die Masse angeschlossen ist.

17. Verwendung einer Hochgeschwindigkeitsstelleinrichtung (8) nach einem der Ansprüche 1 bis 16 zum Schalten einer Schaltklappe (7), die bei einer Brennkraftmaschine, insbesondere eines Kraftfahrzeugs, stromauf wenigstens eines Einlaßventils (5) in einem Einlaßkanal (1) angeordnet ist, der zu mindestens einem Verbrennungsraum (2) der Brennkraftmaschine führt.

## Claims

1. A high-speed actuating device suitable for actuating a switching flap (7) between two switch positions with very short switching times, whereby the switching flap (7) is situated in a gas-carrying line (1) and closes off the line cross section in the first switch position and opens the line cross section in the second switch position,
**characterized in that**
- the high-speed actuating device (8) has two switchable electromagnets (14, 15) between which is arranged an armature (19) which is drive-coupled to the switching flap (7), whereby the armature (19) is in contact with the one electromagnet (14) in the first switch position of the switching flap (7) and is in contact with the other electromagnet in the second switch position of the switching flap device (7),
- the armature (19) is fixedly connected to a shaft (21) which is mounted to rotate about its longitudinal axis, and the switching flap (7) is also fixedly mounted but is axially offset in relation to the armature (19).

2. The high-speed actuating device according to Claim 1,
**characterized in that**
each electromagnet (14, 15) has a yoke (17) on which is provided a stop surface (32) for the armature (19) against which the armature (19) comes to rest in one of the switch positions, whereby the yoke (17) is interrupted in the area of the stop surface (32) by a gap (18) which is bridged by the armature (19) when the armature (19) is in contact with the stop surface (32).

3. The high-speed actuating device according to Claim 2,
**characterized in that**
the opening width of the gap (18) is smaller than the thickness (43) of the yoke (17) as measured next to the stop surface (32) and across the axial extent of the yoke (17) and across the stop surface (32) or is smaller than the thickness (33) of the armature (19) measured across the radial extent and across the axial extent of the armature (19).

4. The high-speed actuating device according to Claim 2 or 3,
**characterized in that**
the yoke (17) has a cross section which tapers to the gap (18) on an end section (34) which terminates at the gap (18).

5. The high-speed actuating device according to any one of Claims 2 through 4,
**characterized in that**
the electromagnets (14, 15) are positioned in relation to the shaft (21) so that the yokes (17) are arranged close to the shaft (21).

6. The high-speed actuating device according to any one of Claims 2 through 5,
**characterized in that**
with respect to the shaft (21), the radial extent of the armature (19) is shorter, in particular is half as large as one side (37) of the yoke (17) on which the stop surface (32) is designed.

7. The high-speed actuating device according to any one of Claims 2 through 6,
**characterized in that**
the cross section of the armature (19) in the direction of flux of the magnetic field is smaller than the cross section of the yoke (17) outside of the stop surface (32), in particular half as large.

8. The high-speed actuating device according to any one of Claims 1 through 7,
**characterized in that**
with respect to the shaft (21), the armature (19) is larger in the axial direction, in particular at least two, three or four times larger than in the radial direction.

9. The high-speed actuating device according to any one of Claims 1 through 8,
**characterized in that**
a spring element (26) is coupled to the shaft (21), with the coupling being accomplished in such a way that in both switch positions of the switching flap (7), the spring element (26) initiates a restoring torque into the shaft (21) driving the switching flap (7) in the direction of the other switch position, and in a central position of the switching flap (7), the spring element (26) does not initiate any restoring torque into the shaft (21).

10. The high-speed actuating device according to Claim 9,
**characterized in that**
the shaft (21) is designed as a hollow shaft, and the spring element is designed as a torsion rod (26) which extends coaxially in the hollow shaft (21), is connected at one end in a rotationally fixed manner to the hollow shaft (21) and at the other end in a rotationally fixed manner to a stationary component (29) of the high-speed actuating device (8).

11. The high-speed actuating device according to Claim 10,
**characterized in that**
the torsion rod (26) is attached to the end (42) of the hollow shaft (21) assigned to the armature (19), and on its end (30) assigned to the switching flap (7), the hollow shaft (21) is supported radially in a rotationally adjustable manner on the torsion rod (26) either directly or indirectly.

12. The high-speed actuating device according to any one of Claims 1 through 11,
**characterized in that**
the switching flap (7) which is arranged in the line cross section in such a way that the shaft (21) stands essentially perpendicular to a longitudinal axis (12) of the line (1).

13. The high-speed actuating device according to any one of Claims 1 through 12,
**characterized in that**
the switch flap (7) extends essentially parallel to the longitudinal axis (12) of the line (1) in its second switch position, which opens the line cross section, and in its first switch position which closes the line cross section, the switch flap (7) extends at an inclination to the line cross section.

14. The high-speed actuating device according to Claim 13,
**characterized in that**
the switch flap (7) extends at an angle of approximately 45° to the line cross section in its first switch position which seals off the line cross section.

15. The high-speed actuating device according to any one of Claims 12 through 14,
**characterized in that**
the gas-carrying line is formed by a fresh air supply line (1) of an internal combustion engine, in particular of a motor vehicle, which supplies fresh air to at least one combustion chamber (2) of the internal combustion engine, whereby the switching flap (7) is situated upstream from at least one intake valve (5) of the particular combustion chamber (2) in the fresh air supply line (11).

16. The high-speed actuating device according to any one of Claims 1 through 15,
**characterized in that**
a switching arrangement (44) which is provided for switching the electromagnets (14, 15) is designed as an H-bridge, has an on/off transistor (46) and a chopper transistor (51) which is controlled by a chopper current regulator (48) as a function of a comparison between a predetermined or predeterminable setpoint current and an actual current, which can be determined with the help of a measurement element (49), whereby the measurement element (49) is connected to the emitter of the on/off transistor (46) on the one hand and to ground on the other hand.

17. Use of a high-speed actuating device (8) according to any one of Claims 1 through 16 for switching a switching flap (7) in an internal combustion engine, in particular in a motor vehicle, this switching flap being situated upstream from at least one intake valve (5) in an intake channel (1) leading to at least one combustion chamber (2) of the internal combustion engine.

## Revendications

1. Dispositif de commande à grande vitesse approprié pour régler un élément de commutation (6) conçu sous la forme d'un clapet de commutation (7) entre deux positions de commutation pendant des temps de commutation très courts, dans lequel le clapet de commutation (7) est disposé dans une conduite (1) d'introduction de gaz et, à la première position de commutation, ferme la section de la conduite et, à la deuxième position de commutation, ouvre la section de la conduite,
**caractérisé en ce que**
- le dispositif de commande à grande vitesse (8) présente deux électroaimants (14,15) commutables, entre lesquels un induit (19), dont le déclenchement est couplé avec le clapet de commutation (7), est disposé, dans lequel l'induit (19) est réglé sur un des électroaimants (14) pendant la première position de commutation du clapet de commutation (7) et sur l'autre électroaimant (15) pendant la deuxième position de commutation du clapet de commutation (7),
- l'induit (19) est relié solidement à un arbre (21) inséré de manière rotative sur l'axe de sa longueur, sur lequel le clapet de commutation (7) est également fixé solidement dans une position décalée par rapport à l'induit (19).

2. Système de commande à grande vitesse selon la revendication 1, **caractérisé en ce que** chaque électroaimant (14,15) présente une fourche (17), sur laquelle une surface de butée (32) destinée à l'induit (19) est réalisée, avec laquelle l'induit (19) est mis en prise à une des positions de commutation, dans lequel la fourche (19) est fendue par une fissure (18) au niveau de la surface de butée (32), laquelle est comblée par la partie de l'induit (19) qui repose sur la surface de butée (32).

3. Dispositif de commande à grande vitesse selon la revendication 2, **caractérisé en ce que** le diamètre d'ouverture de la fissure (18) est inférieur à l'épaisseur (43) de la fourche (17) mesurée près de la surface de butée (32), en travers de l'étendue axiale de la fourche (17) et en travers de la surface de butée (32), ou inférieur à l'épaisseur (33) mesurée de l'induit (19) en travers de l'étendue radiale et en travers de l'étendue axiale de l'induit (19).

4. Dispositif de commande à grande vitesse selon la revendication 2 ou 3, **caractérisé en ce que** la fourche (17) présente au moins sur une portion d'extrémité (34) se terminant par une fissure (18) une section qui va en s'amincissant jusqu'à la fissure (18).

5. Dispositif de commande à grande vitesse selon une des revendications 2 à 4, **caractérisé en ce que** les électroaimants (14,15) sont positionnés relativement à l'arbre (21), de telle sorte que la fourche (17) soit disposée à proximité de l'arbre (21).

6. Dispositif de commande à grande vitesse selon une des revendications 2 à 5, **caractérisé en ce que** l'étendue radiale de l'induit (19) est plus courte par rapport à l'arbre (21), notamment moins grande de moitié, qu'un côté (37) de la fourche (17) sur lequel la surface de butée (32) est réalisée.

7. Dispositif de commande à grande vitesse selon une des revendications 2 à 6, **caractérisé en ce que**, dans la direction d'écoulement du champ magnétique, la section de l'induit (19) est inférieure à la section de la fourche (17) à l'extérieur de la surface de butée (32), notamment moins grande de moitié.

8. Dispositif de commande à grande vitesse selon une des revendications 1 à 7, **caractérisé en ce que**, dans la direction axiale, l'induit (19) est plus grand par rapport à l'arbre (21), notamment au moins deux fois, trois fois ou quatre fois plus grand, que dans la direction radiale.

9. Dispositif de commande à grande vitesse selon une des revendications 1 à 8, **caractérisé en ce qu'**un élément de ressort (26) est couplé avec l'arbre, dans lequel le couplage s'effectue de telle sorte que l'élément de ressort (26) introduise dans l'arbre (21) pendant les deux positions de commutation du clapet de commutation (7) un couple de rappel qui commande le clapet de commutation (7) dans la direction de l'autre position de commutation respective, et **en ce que** l'élément de ressort (26) n'introduit pas de couple de rappel dans l'arbre (21) à une position intermédiaire du clapet de commutation (7).

10. Dispositif de commande à grande vitesse selon la revendication 9, **caractérisé en ce que** l'arbre (21) est conçu sous la forme d'un arbre creux et **en ce que** l'élément de ressort est conçu sous la forme d'une barre de torsion (26), qui s'étend coaxialement à l'intérieur de l'arbre creux (21), et est reliée de manière solidaire en rotation à une extrémité avec l'arbre creux (21) et de manière solidaire en rotation à une autre extrémité avec un composant (29) immobile du dispositif de commande à grande vitesse (8).

11. Dispositif de commande à grande vitesse selon la revendication 10, **caractérisé en ce que** la barre de torsion (26) est fixée à l'extrémité (42) de l'arbre creux (21) coordonnée à l'induit (19) et **en ce que** l'arbre creux (21) est appuyé par son extrémité (30) coordonnée au clapet de commutation (7) directement ou indirectement à la barre de torsion (26) dans une direction radiale et de manière rotative.

12. Dispositif de commande à grande vitesse selon une des revendications 1 à 11, **caractérisé en ce que** le clapet de commutation (7) est disposé dans la section de la conduite, de telle sorte que l'arbre (21) soit essentiellement perpendiculaire à un axe de la longueur (12) de la conduite (1).

13. Dispositif de commande à grande vitesse selon une des revendications 1 à 12, **caractérisé en ce que** le clapet de commutation (7), dans sa deuxième position de commutation qui ouvre la section de la conduite, s'étend essentiellement parallèlement à l'axe de la longueur (12)de la conduite (1) et **en ce que** le clapet de commutation (7), dans sa première position de commutation qui ferme la section de la conduite, est apte à s'étendre à travers la section de la conduite.

14. Dispositif de commande à grande vitesse selon la revendication 13, **caractérisé en ce que** le clapet de commutation, dans sa première position de commutation qui ferme la section de la conduite, est apte à s'étendre approximativement à 45° en travers de la section de la conduite.

15. Dispositif de commande à grande vitesse selon une des revendications 12 à 14, **caractérisé en ce que** la conduite d'introduction de gaz est formée à travers une conduite d'alimentation en air frais (1) d'un moteur à combustion interne, notamment d'un véhicule automobile, laquelle alimente au moins une chambre de combustion (2) du moteur à combustion interne en air frais, dans lequel le clapet de commutation (7) est disposé en amont d'au moins une soupape d'admission (5) de la chambre de combustion (2) respective dans la conduite d'alimentation en air frais (1).

16. Dispositif de commande à grande vitesse selon une des revendications 1 à 15, **caractérisé en ce qu'**une circuiterie (44) pour commuter les électroaimants (14,15) est prévue, laquelle est conçue comme un circuit pont en H, présente un transistor conducteur/bloqué (46) et un transistor découpeur (51), lequel est commandé par un régulateur de hacheur de courant (48) en fonction d'une comparaison entre un débit de courant donné ou un débit de courant prévisible et un courant effectif détecté à l'aide d'un élément de mesure (49), dans lequel l'élément de mesure (49) est connecté d'un côté à l'émetteur du transistor conducteur/bloqué (46) et d'un autre côté à la masse.

17. Utilisation du dispositif de commande à grande vitesse (8) selon une des revendications 1 à 16 pour commuter un clapet de commutation (7), lequel est disposé au moins en amont d'une soupape d'admission (5) dans un canal d'admission (1) d'un moteur à combustion interne, notamment d'un véhicule automobile, ledit canal d'admission (1) aboutissant au moins à une chambre de combustion (2) du moteur à combustion interne.
